# EUROPEAN PATENT SPECIFICATION

(11) **EP 1 862 375 B1**
(45) Date of publication and mention of the grant of the patent: **07.09.2011**
(21) Application number: 07009506.2
(22) Date of filing: 11.05.2007
(51) Int. Cl.: B62D 15/02, G08G 1/16

(54) **Parking assist method and parking assist device**
Einparkhilfsverfahren und Einparkhilfsvorrichtung
Procédé et dispositif d'assistance au parking

(30) Priority: 29.05.2006 JP 2006148698; 20.11.2006 JP 2006313510
(43) Date of publication of application: 05.12.2007
(73) Proprietor: AISIN AW CO., LTD., Anjo-shi, Aichi 444-1192 (JP)
(72) Inventor: Sakakibara, Seiji, Okazaki-shi Aichi 444-8564 (JP)
(74) Representative: Kramer - Barske - Schmidtchen

(56) References cited:
- EP-A- 1 022 903
- EP-A- 1 199 225
- WO-A-2005/120932
- US-A1- 2001 026 317

## Description

The present invention relates to a parking assist method and a parking assist device.

An on-board device for displaying images captured by an on-board camera on a display is known in the related art. This device inputs an image signal from an on-board camera attached to the rear end of a vehicle, and outputs a peripheral image based on the image signal together with guide lines to a display disposed near the driving seat.

Japanese Patent Application Publication No. JP-A-2002-373327 describes an image processing device that accumulates image data input from an on-board camera during a parking operation, performs image processing using the accumulated image data, and displays a bird's-eye view image of the peripheral area of the vehicle.

Further, Japanese Patent Application Publication No. JP-A-2004-114879 proposes a device which not only displays a bird's-eye view image, but also superposes a predicted route corresponding to the steering angle at the current point in time and a target route to a parking frame on the bird's-eye view image.

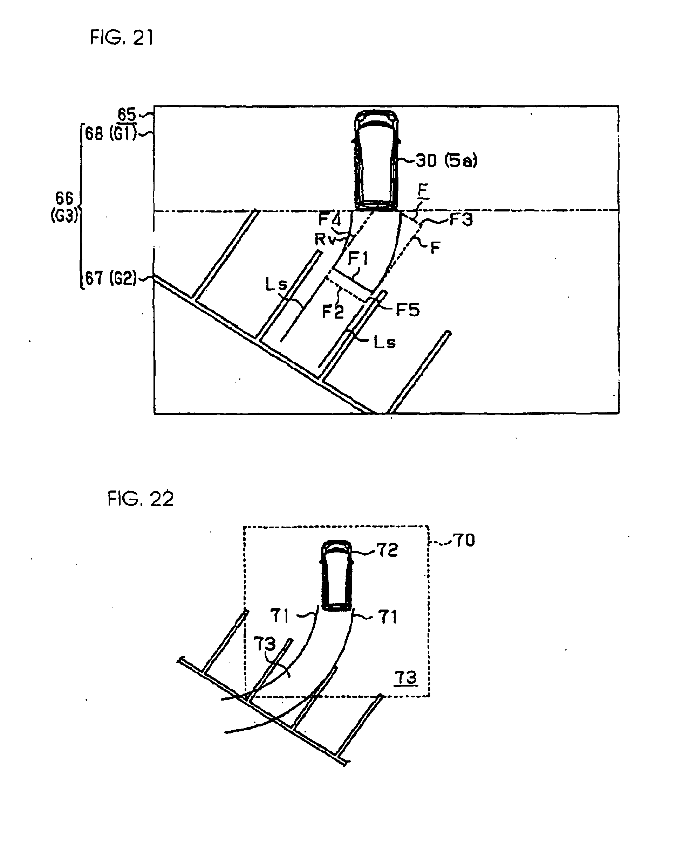

When a predicted route 71 and a vehicle image 72 are superposed on a peripheral image 70 shown in FIG. 22, the resulting image serves favorably as a guidepost for a steering wheel operation or the like, but only the deviation between the route that would be taken were the vehicle to reverse (or advance) at the current steering angle and a target parking area 73 can be learned from the image, and it is impossible to determine a specific steering wheel operation. In other words, insufficient information relating to the driving operation to be performed during parking is provided, and therefore the driver must perform repeated small adjustments of the steering angle. Meanwhile, with a device that displays a target route to a parking frame, such as Japanese Patent Application Publication No. JP-A-2004-114879, the user must specify a target parking space manually so that the target route from the current position to a target position can be calculated. When the parking space does not fit entirely into the camera frame, the parking space cannot be specified, and hence the target route cannot be calculated.

Another method and device for assisting the parking of a motor vehicle is known from WO 2005/120932A wherein a peripheral image is output to a display mechanism on the basis of image data obtained from an imaging device provided in a vehicle, wherein a straight driving guide index indicating a position for starting straight driving relative to a target parking area is output to the display mechanism together with the peripheral image. Further parking assist methods and devices are known from EP1022903A, US 2001/026317 A and EP 1199225A

The present invention has been designed in consideration of these problems, and an object thereof is to provide a parking assist method and a parking assist device for . assisting a steering wheel operation during parking.

In the parking assist method according to a first aspect, a straight driving guide index is displayed together with a peripheral image, and therefore a vehicle need only be turned to the position indicated by the straight driving guide index and then driven in a straight line in accordance with the straight driving guide index from the straight driving position onward. Hence, a driving operation can be assisted during parking, which requires a comparatively high level of driving skill.

In the parking assist device according to a second aspect, the straight driving guide index enabling the vehicle to drive into a target parking area by driving in a straight line is displayed on a display mechanism together with the peripheral image. Accordingly, the driver need only turn the vehicle up to the straight driving guide index and then turn the steering wheel back from the index onward and drive in a straight line. Thus, a steering wheel operation of the vehicle can be assisted during a parking operation requiring a high level of driving skill.

In the parking assist device according to a third aspect, a predicted route index of the vehicle corresponding to the current steering angle is rendered together with the peripheral image, and therefore the route of the vehicle to the target parking area can be made more easily understandable.

In the parking assist device according to a fourth aspect, the straight driving guide index is rendered in the position of a contact point between a straight line denoting a defining line, or a straight line parallel to this straight line, and a predicted course line, and therefore a straight driving start position corresponding to the current steering angle can be indicated. Accordingly, the driver need only turn the vehicle up to the straight driving guide index and then turn the steering wheel back from the index onward and drive in a straight line. Alternatively, when the straight driving start position is determined to be inappropriate, the position of the straight driving guide index may be modified by turning the steering wheel.

In the parking assist device according to a fifth aspect, a straight driving course line parallel to the defining line is rendered from a position in which the vehicle becomes parallel to the defining line, and therefore deviation or the like between the straight driving course line and a white line in the peripheral image can be grasped.

In the parking assist device according to a sixth aspect, a predicted position index of the time at which the vehicle becomes parallel to the defining line is rendered. In other words, the straight driving start position is indicated by the outer form of the vehicle, and therefore the parking start position can be understood intuitively.

In the parking assist device according to a seventh aspect, a predicted course line from the rear of the vehicle to the contact point between the straight line denoting the defining line, or the straight line parallel to this straight line, and the predicted course line is rendered as the predicted route index. Hence, a predicted route to the straight driving start position corresponding to the steering wheel is rendered, and therefore, the course of the vehicle can be displayed in an easily understandable manner.

In the parking assist device according to an eighth aspect, a current position index is displayed on the peripheral image, and therefore, the relative position between the target parking area displayed on the peripheral image and the vehicle can be confirmed easily. Furthermore, each of the guide lines rendered on the peripheral image can be understood intuitively.

In the parking assist device according to a ninth aspect, a current dead angle area of an imaging device can be displayed using latest image data and recorded image data captured and accumulated in the past. Hence, the target parking area can be confirmed in a wider range.

In the parking assist device according to a tenth aspect, the straight driving guide index is displayed together with a bird's-eye view image, and therefore, the relative position between the target parking area and the straight driving guide index can be understood easily.
FIG. 1 is a block diagram of a parking assist system according to an embodiment;
FIG. 2 is an illustrative view of a vehicle image;
FIG. 3 is an illustrative view showing an imaging range of a camera;
FIG. 4A is a pattern view of image data;
FIG. 4B is a pattern view of bird's-eye view data;
FIG. 5 is an illustrative view of bird's-eye view data writing processing;
FIG. 6A is an illustrative view of a white line on a road surface;
FIG. 6B is an illustrative view of guide line calculation;
FIG. 6C is an illustrative view of rendered guide lines;
FIG. 7 is an illustrative view of a processing procedure according to this embodiment;
FIG. 8 is an illustrative view of a processing procedure according to this embodiment;
FIG 9 is an illustrative view of a processing procedure according to this embodiment;
FIG. 10 is an illustrative view of a processing procedure according to this embodiment;
FIG. 11 is an illustrative view of a processing procedure according to this embodiment;
FIG. 12 is an illustrative view of a synthesized image;
FIG. 13 is an illustrative view of a parking assist screen;
FIG. 14 is an illustrative view of a parking assist screen;
FIG. 15 is an illustrative view of processing for rendering a straight driving guide frame;
FIG. 16 is an illustrative view of a parking assist screen according to a second embodiment;
FIG. 17 is an illustrative view showing another example of parking assistance, FIG. 17A being an illustrative view of a guide line depicting a third segment, FIG. 17B being an illustrative view of a guide line omitting second segments, and FIG. 17C being an illustrative view of voice output assistance;
FIG. 18 is an illustrative view showing another example of guide line rendering processing;
FIG. 19 is an illustrative view showing another example of a guide line;
FIG. 20A is an illustrative view of a guide line omitting a predicted axle position;
FIG. 20B is an illustrative view of a guide line having a modified straight driving guide frame;
FIG. 21 is an illustrative view showing another example of a guide line; and
FIG. 22 is an illustrative view of a conventional guide line.

### First Embodiment

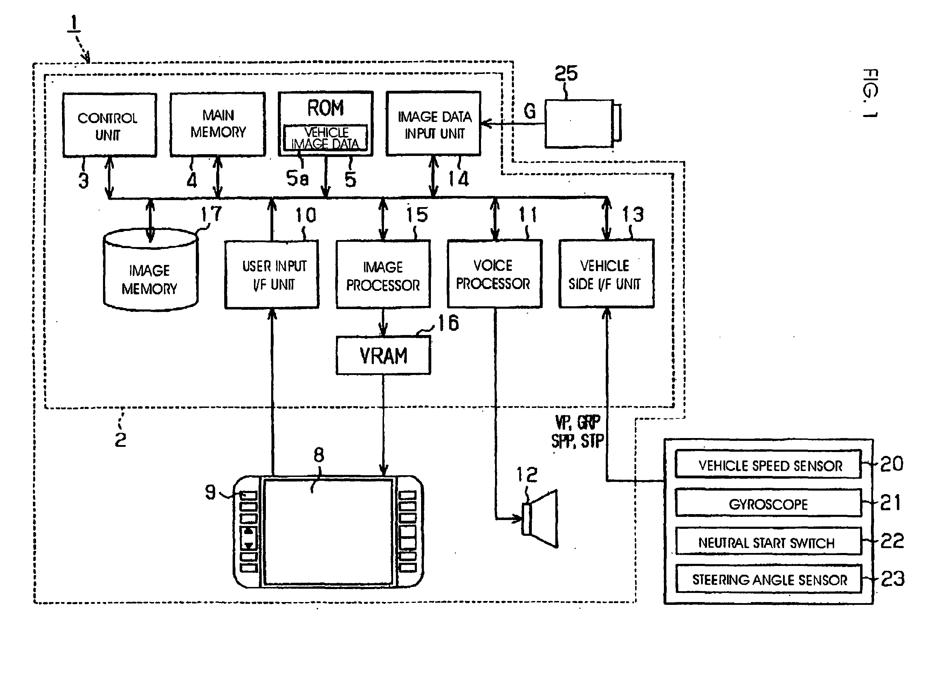

An embodiment of a parking assist device according to the present invention will be described below in accordance with FIGS. 1 to 14. FIG. 1 is a block diagram illustrating the structure of a parking assist system 1.

As shown in FIG. 1, the parking assist system 1 has a control device 2 serving as a parking assist device. The control device 2 has a control unit 3, a main memory 4, and ROM 5. The control unit 3 includes a CPU and the like, not shown in the drawing, and performs principal control of various types of processing in accordance with various programs such as a parking assist program stored in the ROM 5. The main memory 4 stores calculation results of the control unit 3 temporarily, and also stores various variables, flags, and so on used during parking assistance.

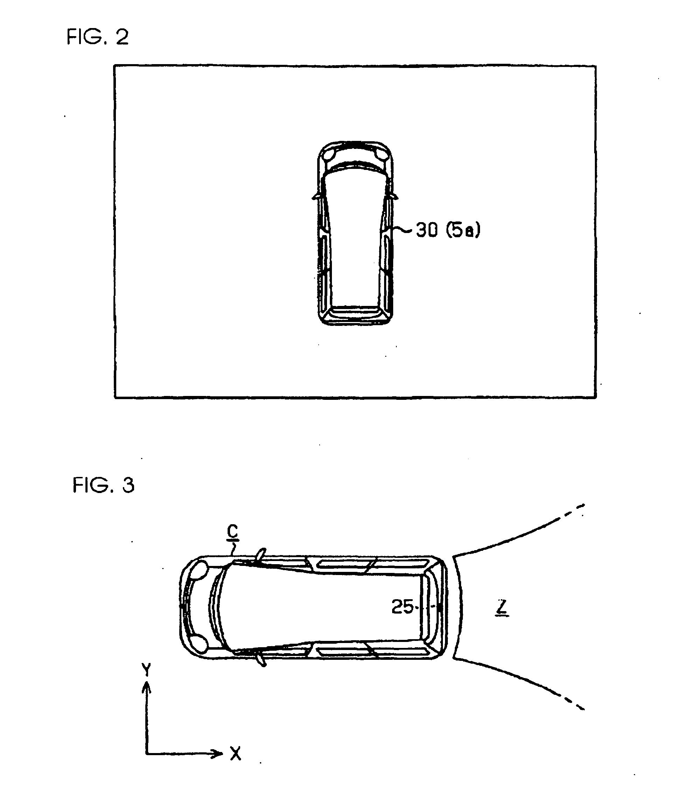

The ROM 5 stores vehicle image data 5a. The vehicle image data 5a are output to a display 8 serving as a display mechanism for displaying an image of a vehicle (see FIG. 3) in which the parking assist system 1 is installed. When the vehicle image data 5a are output to the display 8, a vehicle image 30 serving as a current position index, such as that shown in FIG. 2, is displayed.

The display 8 is a touch panel, and when an input operation is performed on the touch panel, a signal corresponding to the input operation is output to the control unit 3 via a user input interface unit (to be referred to hereafter as a user input I/F unit 10) provided in the control device 2. Likewise, when an input operation is performed by the user on an operating switch 9 provided adjacent to the display 8, a signal corresponding to the input operation is output to the control unit 3 via the user input I/F unit 10.

The control device 2 also has a voice processor 11. The voice processor 11 includes memory storing a voice file, a digital/analog converter, and so on, not shown in the drawing, and uses the voice file to output a guiding voice or warning voice through a speaker 12 installed in the parking assist system 1.

The control device 2 also has a vehicle side interface unit (to be referred to hereafter as a vehicle side I/F unit 13). Through the vehicle side I/F unit 13, the control unit 3 inputs a vehicle speed pulse VP from a vehicle speed sensor 20 provided in a vehicle C, and counts the pulse count. The control unit 3 also inputs a bearing detection signal GRP from a gyroscope 21 via the vehicle side I/F unit 13, and updates the current bearing, which is a variable stored in the main memory 4.

The control unit 3 also inputs a shift position signal SPP from a neutral start switch 22 of the vehicle C via the vehicle side I/F unit 13, and updates the shift position, which is a variable stored in the main memory 4. The control unit 3 also inputs a steering sensor signal STP from a steering angle sensor 23 via the vehicle side I/F unit 13. On the basis of the steering sensor signal STP, the control unit 3 updates the current steering angle of the vehicle C, which is stored in the main memory 4.

When the shift position signal SPP indicating reverse is input, the control unit 3 sets the position of the vehicle at this time as a reference position. Then, on the basis of the vehicle speed pulse VP and the steering sensor signal STP, the control unit 3 calculates relative coordinates and a relative steering angle from the reference position.

The control device 2 also has an image data input unit 14 serving as an image data obtaining mechanism. The image data input unit 14 obtains image data G successively by drive-controlling a back monitor camera (to be referred to hereafter simply as a camera 25), which serves as an imaging device provided in the vehicle C, in accordance with the control of the control unit 3.

As shown in FIG. 3, the camera 25 is attached to the rear end of the vehicle, for example the trunk door of the vehicle C, such that the optical axis is oriented downward. The camera 25 is a digital camera for capturing color images, and has an optical mechanism constituted by a wide angle lens, a mirror, and so on, and a CCD imaging element (neither of which are shown in the drawing). The camera 25 has a visual field of 140 degrees to the left and right, for example, and an imaging region Z which extends rearward for several meters, including the rear end of the vehicle C. On the basis of the control of the control unit 3, the image data input unit 14 obtains image data G that have been subjected to analog/digital conversion by the camera 25, and stores the image data G temporarily in image memory 17 serving as an image data storage mechanism provided in the control device 2. Note that the camera 25 may output an image signal to the image data input unit 14, whereupon the image data input unit 14 performs analog/digital conversion on the basis of the image signal to generate the image data G.

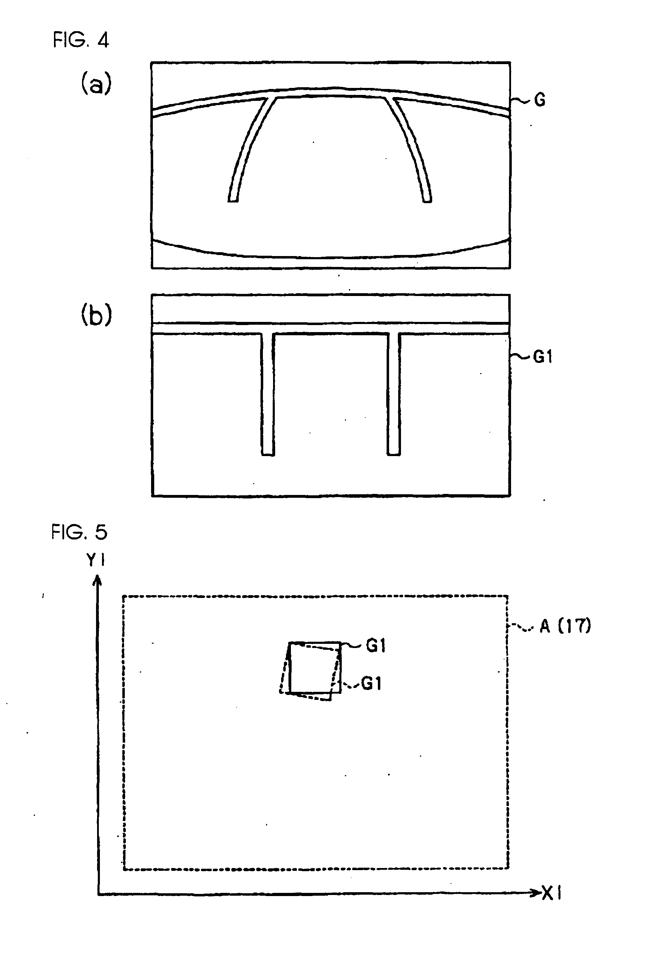

Further, as shown in FIG. 1, the control device 2 also has an image processor 15 serving as an image processing mechanism, an output control mechanism, a first index rendering mechanism, a second index rendering mechanism, a defining line detecting mechanism, a vehicle position rendering mechanism, and an image synthesizing mechanism. When the vehicle C reverses from the reference position by an image recording distance D1 (in this embodiment, 100 mm), the image processor 15 inputs image data G such as those shown in pattern form in FIG. 4A via the image data input unit 14. Then, by subjecting the image data G to known geometric conversion, bird's-eye view data G1 serving as recorded image data, such as those shown in FIG. 4B, are generated. The viewpoint of the camera 25 is located diagonally upward from the road surface, but the bird's-eye view data G1 are converted into image data in which the road surface is seen from above in a vertical direction.

Further, the image processor 15 inputs from the control unit 3 coordinate data indicating the relative coordinates from the reference position and steering angle data indicating a relative steering angle having the steering angle in the reference position as a reference. Then, as shown in FIG. 5, the bird's-eye view data G1 are written into an area indicated by a solid line, which corresponds to the coordinate data and steering angle data, of a memory area A of the image memory 17. When writing bird's-eye view data G1 of a reversed position from the reference position after writing the bird's-eye view data G1 of the reference position, the bird's-eye view data G1 are overwritten into an area indicated by a dot-dash line on the basis of the relative coordinates and relative steering angle based on the reference position. Pixel values of the newer bird's-eye view data G1 are selected and written into the area in which the bird's-eye view data G1 overlap. In so doing, an image based on the previously written bird's-eye view data G1 and an image based on the latterly written bird's-eye view data G1 form a continuous image. Thus, every time the vehicle C reverses by the image recording distance D1, bird's-eye view data G1 captured at each imaging point are accumulated in the image memory 17.

When at least a predetermined amount of bird's-eye view data G1 has been accumulated in the image memory 17, the image processor 15 reads the bird's-eye view data G1 in a predetermined area. Furthermore, latest image data G reflecting the current conditions on the periphery of the vehicle (to be referred to hereafter as current image data G2) are newly obtained from the camera 25. After subjecting the current image data G2 to bird's-eye view conversion, the bird's-eye view data G1 and the bird's-eye view-converted current image data G2 are subjected to synthesis processing, whereupon synthesis-processed synthesized data G3 are displayed on the display 8.

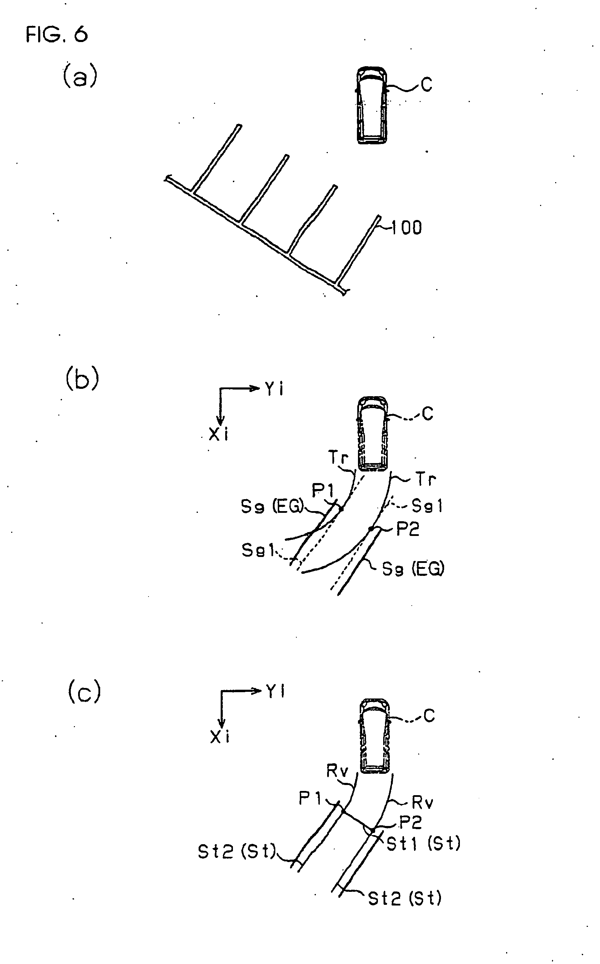

Further, the image processor 15 renders guide lines on the synthesized image of the bird's-eye view data G1 and the current image data G2. More specifically, first the image processor 15 performs detection processing to detect white lines defining the target parking area. In this embodiment, this processing employs well-known edge extraction processing. For example, the synthesized data G3 forming a color image are converted into grayscale data, and thresholds such as an average brightness value and a median value are set. Then, when the brightness gradient or the like between pixels is less than the threshold, an edge is not detected, and when the brightness gradient or the like is equal to or greater than the threshold, an edge is detected. Alternatively, the brightness of each pixel of the bird's-eye view data G1 converted into grayscale data and the pixel value difference between each pixel and the adjacent pixel thereto is detected. Then, a pixel having a large difference is detected as an edge. As shown in FIG. 6A, for example, when white lines 100 serving as defining lines to the rear of the vehicle are captured by the camera 25 and bird's-eye view data G1 are generated, the synthesized data G3 using these bird's-eye view data G1 are subjected to edge detection, and as a result, the white lines 100 are extracted as edges EG, as shown in FIG. 6B.

A discontinuous edge EG may be detected as a result of edge extraction, and therefore the image processor 15 performs Hough transform, for example, on the basis of the edge extraction result to recognize the edge EG as a straight line (segment) within the image space. The image processor 15 then sets the straight line (segment) determined in this manner as a white line approximation Sg.

Further, on the basis of the steering sensor signal STP, the image processor 15 determines a pair of predicted course lines Tr of the vehicle C corresponding to the vehicle width as an expression within the image coordinate system (Xi, Yj), and determines a contact point between the predicted course line Tr and the white line approximation Sg. As shown in FIG. 6B, when the predicted course line Tr and the white line approximation Sg do not contact, a parallel expression Sg1 which is parallel to the white line approximation Sg and contacts the predicted course line Tr is calculated.

After calculating the white line approximations Sg or parallel expressions Sg 1 and the coordinates of contact points P1, P2 with the predicted course lines Tr, a first segment St1 serving as a straight driving start position, which passes through each contact point P1, P2 and has an identical width to the vehicle width, is determined, as shown in FIG. 6C. The first segment St1 indicates a rear axle position when the vehicle C reverses along the predicted course lines Tr from its current position so as to become parallel to the white line approximations Sg. In other words, from the current position of the vehicle C to the first segment St1, if the vehicle C turns in accordance with the predicted course lines Tr while maintaining the current steering angle, the rear axle of the vehicle C will match the first segment St1. Accordingly, if the vehicle C drives straight back once the rear axle of the vehicle C has matched the first segment St1, the vehicle C can be parked parallel to the white lines 100.

After determining the first segment St1 in this manner, the image processor 15 determines second segments St2 serving as straight driving course lines having a substantially identical length to the vehicle length, which are parallel to the white line approximations Sg or the parallel expressions Sg1 from the contact points P1, P2. From the second segments St2, the relative distance between the vehicle body and the white lines 100 can be learned, and therefore, the leeway on either side of the vehicle C after turning at the current steering angle and then driving in a straight line can be learned. The first segment St1 and second segments St2 constitute straight driving guide lines St serving as straight driving guide index for providing information relating to straight driving following turning. Further, the image processor 15 cuts the predicted course lines Tr to determine turning guide lines Rv serving as a predicted route index corresponding to the length from the rear end of the vehicle to the first segment St1. The turning guide lines Rv and straight driving guide lines St are superposed onto the image based on the synthesized data G3.

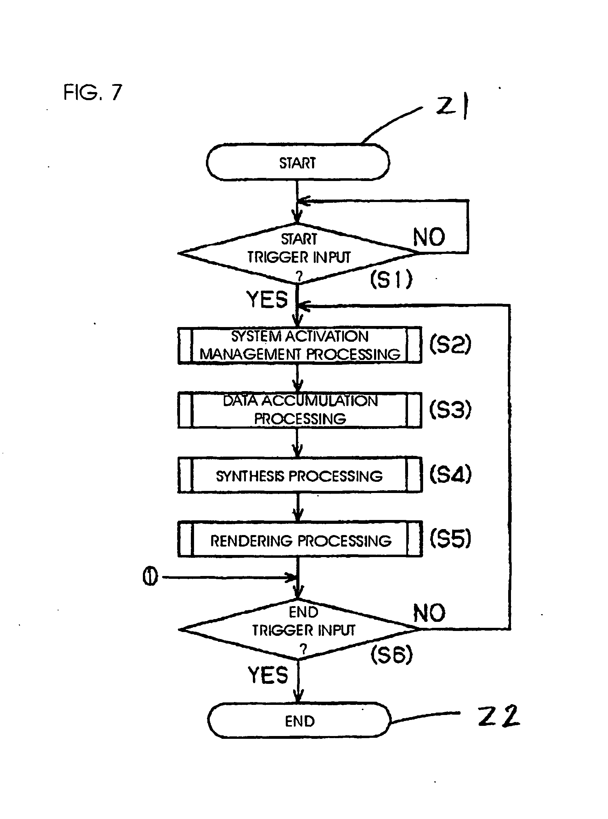

Next, a processing procedure of this embodiment will be described using FIGS. 7 to 11. As shown in FIG. 7, first the control unit 3 waits for input of a start trigger in accordance with the parking assist program stored in the ROM 5 (step S1). In this embodiment, the start trigger is an input signal generated upon activation of an ignition module (not shown). When the start trigger is input, system activation management processing (step S2), data accumulation processing (step S3), synthesis processing (step S4), and rendering processing (step S5) are performed through the control of the control unit 3. The control unit 3 then determines whether or not an end trigger has been input (step S6), and if not, returns to the step S2. In this embodiment, the end trigger is an input signal generated when the ignition module is switched OFF or the parking assist system 1 is shut down.

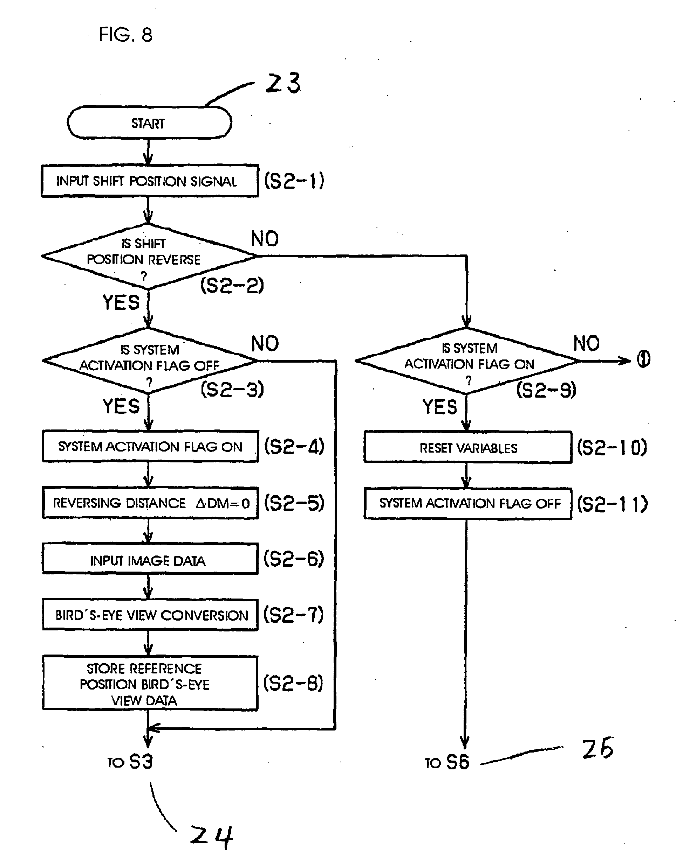

Next, the system activation management processing S2 will be described using FIG. 8. First, the control unit 3 inputs the shift position signal SPP via the vehicle side I/F unit 13, and updates the shift position, which is a variable stored in the main memory 4 (step S2-1). Then, the control unit 3 determines whether or not the shift position is reverse (step S2-2). When the shift position is determined to be reverse (YES in the step S2-2), the current position of the vehicle C is set as the reference position.

Next, the control unit 3 determines whether or not a system activation flag stored in the main memory 4 is OFF (step S2-3). The system activation flag is a flag indicating whether or not a parking assist mode has been activated. Having determined that the system activation flag is ON (NO in the step S2-3), the control unit 3 advances to the subsequent data accumulation processing (step S3).

When the shift position shifts to reverse, the control unit 3 determines that the system activation flag is OFF (YES in the step S2-3). In this case, the control unit 3 updates the system activation flag to ON (step S2-4). Further, the control unit 3 initializes a reversing distance ΔDM, which is a variable stored in the main memory 4, to "0" (step S2-5). Further, through the control of the control unit 3, the image processor 15 inputs the image data G from the camera 25 via the image data input unit 14 (step S2-6), and subjects the image data G to bird's-eye view conversion (step S2-7), as shown in FIG. 4A and 4B, to generate the bird's-eye view data G1.

Further, the image processor 15 stores the bird's-eye view data G1 in a data area corresponding to the reference position within the image memory 17 via the control unit 3 (step S2-8). After storing the reference position bird's-eye view data G1, the routine advances to the subsequent data accumulation processing.

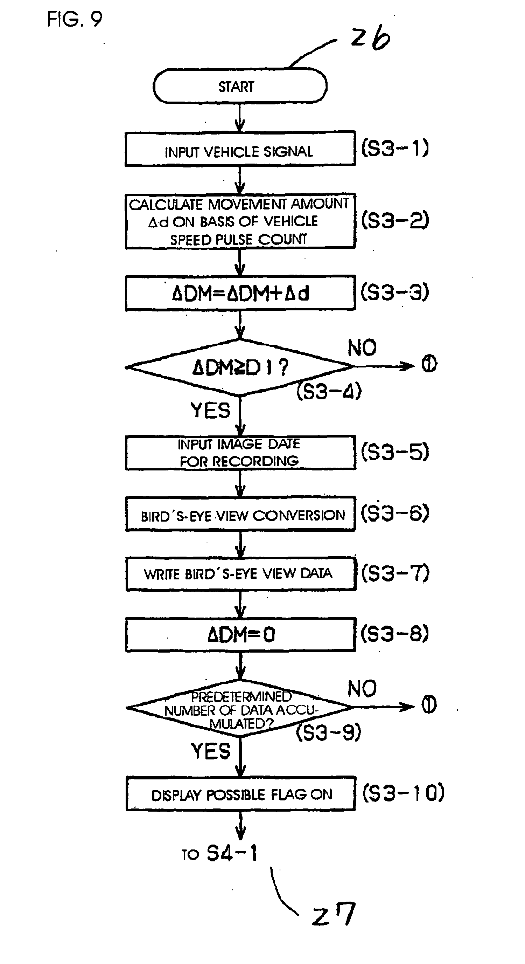

The data accumulation processing will now be described using FIG. 9. First, the control unit 3 inputs a vehicle signal constituted by the vehicle speed pulse VP and the steering sensor signal STP (step S3-1). As described above, the control unit 3 counts the pulse count on the basis of the vehicle speed pulse VP input as the vehicle C reverses. Then, on the basis of the pulse count, the control unit 3 updates a movement amount Δd stored in the main memory 4 (step S3-2). Further, the control unit 3 updates the reversing distance ΔDM by adding the movement amount Δd to the reversing distance ΔDM initialized in the step S2-5 (step S3-3). When the reversing distance ΔDM is updated, the movement amount Δd is reset. A determination is then made as to whether or not the reversing distance ΔDM is equal to or greater than the image recording distance D1 (step S3-4). In this embodiment, the image recording distance D1 is set at 100 mm.

When it is determined that the reversing distance ΔDM is less than the image recording distance D1 (NO in the step S3-4), the routine advances to a step S6 (see FIG 7), where a determination is made as to whether or not the end trigger has been input. When the end trigger has not been input (NO in the step S6), the routine returns to the system activation management processing (step S2).

On the other hand, when it is determined that the reversing distance ΔDM is equal to or greater than the image recording distance D1 (YES in the step S3-4), the image processor 15 inputs image data G for recording (step S3-5). These image data G are then subjected to bird's-eye view conversion to generate bird's-eye view data G1 such as those shown in FIG. 4B (step S3-6). The image processor 15 also inputs coordinate data and steering angle data relating to the time at which the image data G for recording were captured, and writes the bird's-eye view data G1 in a position corresponding to the coordinate data and steering angle data within the memory area of the image memory 17 (step S3-7). When the bird's-eye view data G1 are written in the image memory 17, a data counter stored in the main memory 4 is incremented, and the reversing distance ΔDM is initialized to "0" (step S3-8).

Then, on the basis of the data counter stored in the main memory 4, the control unit 3 determines whether or not a predetermined amount of bird's-eye view data G1 has been stored in the image memory 17 (step S3-9). The predetermined amount is set at 10, for example, and when the control unit 3 determines that the predetermined amount of bird's-eye view data G1 has been stored (YES in the step S3-9), a display possible flag stored in the main memory 4 is switched ON (step S3-10), and the routine advances to the subsequent synthesis processing (step S4). The display possible flag is a flag indicating whether or not synthesized data G3 employing the bird's-eye view data G1 can be synthesized. When it is determined that the predetermined amount of bird's-eye view data G1 has not been stored (NO in the step S3-9), the routine advances to the step S6, where a determination is made as to whether or not the end trigger has been input, and when the end trigger has not been input, the routine returns to the step S2.

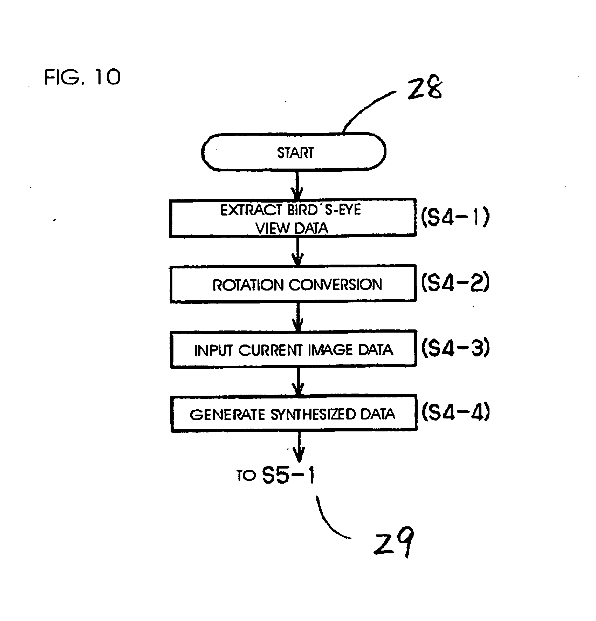

Next, the synthesis processing will be described using FIG. 10. First, the image processor 15 extracts a predetermined area based on the current coordinates and current steering angle of the vehicle C from a memory area A of the main memory 17 in which the bird's-eye view data G1 are written (step S4-1). In this embodiment, pixel values of the bird's-eye view data G1 written in an area corresponding to the current rear portion of the vehicle C and the periphery thereof are read from the memory area A of the image memory 17.

When the bird's-eye view data G1 are extracted from the image memory 17, the extracted bird's-eye view data G1 are rotated in accordance with the current steering angle (step S4-2).

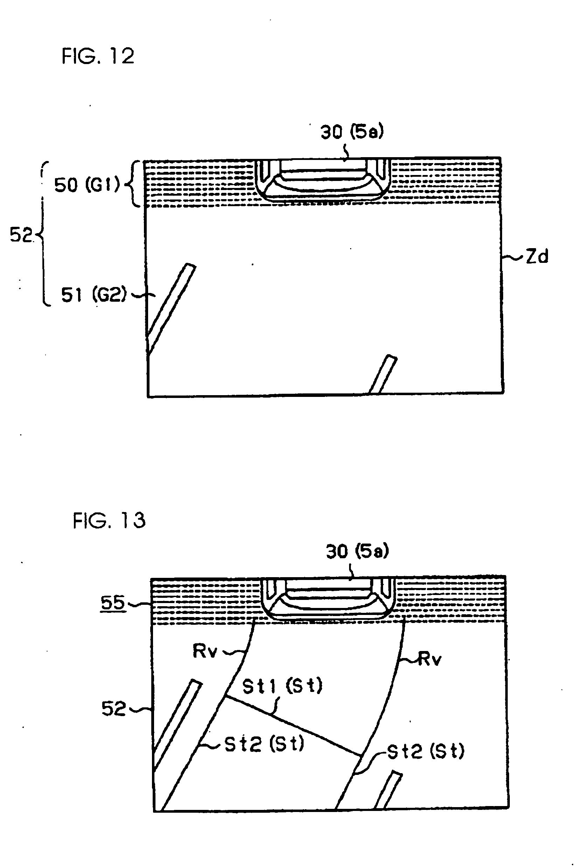

Further, the image processor 15 inputs the current image data G2 from the camera 25 (step S4-3), and generates the synthesized data G3 using the bird's-eye view data G1 and current image data G2 (step S4-4). More specifically, as shown in FIG. 12, the image processor 15 disposes the rotated bird's-eye view data G1 at the top of a display area Zd of the display 8. The image processor 15 also subjects the current image data G2 to bird's-eye view conversion and disposes the bird's-eye view-converted current image data G2 at the bottom of the display area Zd of the display 8. Thus, a recorded image 50 serving as a peripheral image based on the bird's-eye view data G1 is displayed at the top of the display area Zd. The recorded image 50 is an image displaying the current rear portion of the vehicle C and the periphery thereof, and displays the current dead angle area of the camera 25. A current image 51 serving as a peripheral image based on the current image data G2 is displayed at the bottom of the display area Zd. The current image 51 is an image of the current imaging area Z of the camera 25, and serves as a bird's-eye view image of the road surface included in the imaging area Z.

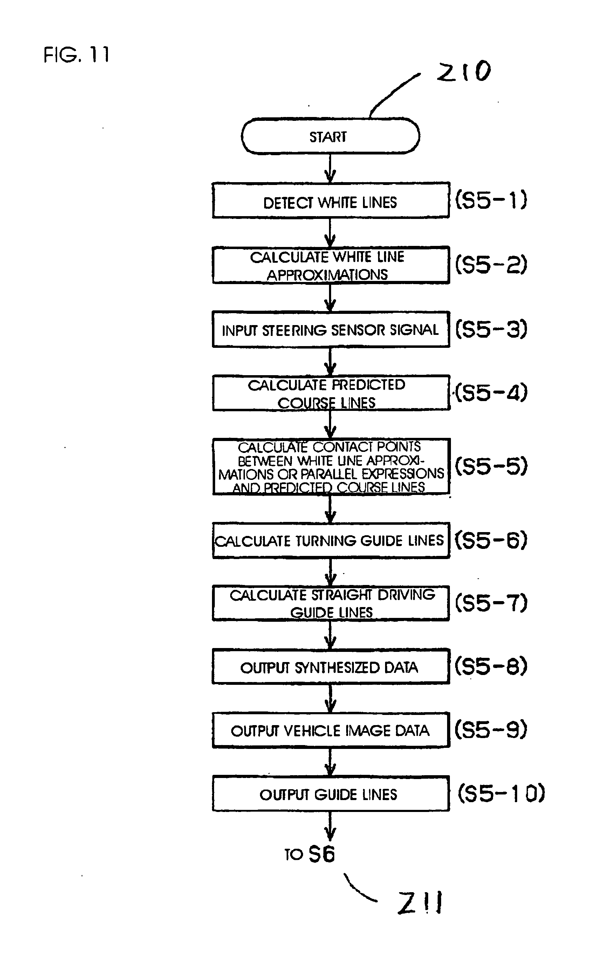

Next, the image processor 15 performs the rendering processing shown in FIG. 11. First, the image processor 15 performs the white line detection processing described above on the synthesized data G3 (step S5-1). The image processor 15 converts the synthesized data G3 into grayscale data and performs edge extraction on the basis of the brightness of each pixel. Further, the image processor 15 performs Hough transform or the like on the edge extraction result to calculate white line approximations Sg such as those shown in FIG. 6B (step S5-2). At this time, only the edges EG at the tip end of each white line 100 need be detected. In this embodiment, when the pair of white line approximations Sg cannot be calculated because the edges EG cannot be detected or the like, the predicted course lines Tr are simply rendered on the current image 51.

Further, the control unit 3 inputs the steering sensor signal STP via the vehicle side I/F unit 13 (step S5-3), and calculates the predicted course lines Tr (step S5-4).

Next, as shown in FIG. 6B, the contact points P1, P2 between the predicted course lines Tr and the white line approximations Sg are calculated (step S5-5). As described above, when the predicted course lines Tr and white line approximations Sg do not contact each other, parallel expressions Sg1 that are parallel to the white line approximations Sg and contact the predicted course lines Tr are calculated, and the contact points P1, P2 between the predicted course lines Tr and parallel expressions Sg1 are determined.

Once the contact points P1, P2 have been calculated, turning guide lines Rv having the contact points P1, P2 as terminals are calculated (step S5-6). At this time, the image processor 15 cuts the predicted course lines Tr from the vehicle rear end to the contact points P1, P2, and sets the resulting segments as the turning guide lines Rv, as shown in FIG. 6C.

Further, the image processor 15 calculates the straight driving guide lines St (step S5-7). In other words, as described above, the contact points P1, P2 are connected and the resulting first segment St1 is determined as a straight line expression. Further, using the contact points P1, P2 as starting points, the image processor 15 calculates the pair of second segments St2 parallel to the respective white line approximations Sg or parallel expressions Sg1.

Next, the image processor 15 outputs the synthesized data G3 stored in the VRAM 16 to the display 8 (step S5-8). The image processor 15 also outputs the vehicle image data 5a to a predetermined position, and displays a synthesized image 52 serving as a peripheral image such as that shown in FIG. 12 on the display 8 (step S5-9).

The image processor 15 then outputs the turning guide lines Rv and the straight driving guide lines St to the synthesized image 52 (step S5-10). Thus, a parking assist screen 55 such as that shown in FIG. 13 is displayed on the display 8. The driver confirms the deviation between the straight driving guide lines St and the white lines on the synthesized image 52, and when the vehicle C may be turned at the current steering angle, the driver turns the vehicle C while maintaining the current steering wheel operation until the rear axle of the vehicle C reaches the first segment St1. On the other hand, if the driver determines that the current steering angle must be modified when the deviation between the straight driving guide lines St and the white lines on the synthesized image 52 is large or that the gap between each white line and each second segment St2 is too large, the driver turns the steering wheel. At this time, all of the processes described above are repeated, and the turning guide lines Rv and straight driving guide lines St are rendered anew.

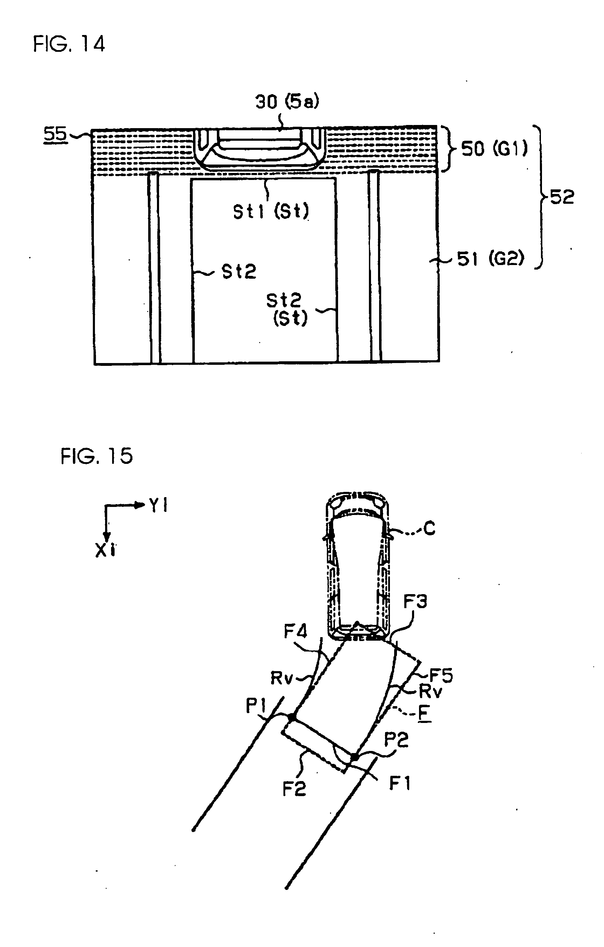

Then, after confirming the relative positions of the straight driving guide lines St and the white lines, the driver turns the vehicle C while maintaining the steering angle such that when the rear axle of the vehicle C reaches the first segment St1, the vehicle C is substantially parallel to the white lines. At this time, a parking assist screen 55 such as that shown in FIG. 14 is displayed on the display 8. The turning guide lines Rv are no longer displayed, and the straight driving guide lines St are superposed on the current image 51. At this point in time, the driver turns the steering wheel back and drives the vehicle C straight back so that the vehicle C can be parked in an appropriate position within the target parking area.

When parking is complete, the driver operates the shift lever to modify the shift position to a position other than reverse, such as parking or neutral. As a result, the control unit 3 determines that the shift position is not reverse in the step S2-2 of FIG. 8 (NO in the step S2-2), and then determines whether or not the system activation flag is ON (step S2-9). When the parking assist mode has already been terminated, the system activation flag is OFF (NO in the step S2-9), and therefore the control unit 3 determines whether or not the end trigger has been input (step S6). On the other hand, immediately after the completion of parking, the system activation flag remains ON. Therefore, the control unit 3 determines that the system activation flag is ON (YES in the step S2-9), and resets the variables stored in the main memory 4 (step S2-10). The control unit 3 then switches the system activation flag OFF (step S2-11). When the end trigger is input (YES in the step S6), the processing is terminated.

According to the first embodiment, the following effects can be obtained.
(1) In the first embodiment, the turning guide lines Rv corresponding to the current steering angle and the straight driving guide lines St indicating the starting position of straight driving in relation to the target parking area are displayed on the display 8 together with the bird's-eye view synthesized image 52 of the vehicle periphery. Hence, the driver need only turn the vehicle C up to the straight driving start position indicated by the straight driving guide lines St, and then turn the steering wheel back and advance in a straight line from the straight driving start position onward. Hence, a steering wheel operation of the vehicle C can be assisted during a parking operation requiring driving skill.
(2) In the first embodiment, a position in which the rear axle of the vehicle C becomes parallel with the white lines 100 while maintaining the current steering angle is indicated as the straight driving start position by the first segment St1. Hence, the driver can obtain a rough estimate of the straight driving start position. Further, when the straight driving start position is not appropriate, the steering angle can be modified by operating the steering wheel.
(3) In the first embodiment, the second segments St2 parallel with the white lines 100 are rendered from the first segment St1 at which the vehicle C becomes parallel with the white lines 100. Hence, the driver is able to grasp the deviation between the rendered second segments St2 and the white lines in the synthesized image 52, the leeway between the second segments St2 and the respective white lines, and so on. Accordingly, when the deviation between the second segment St2 and the white line is large or the like, the driver can change the turning course by turning the steering wheel.
(4) In the first embodiment, the vehicle image 30 is displayed on the synthesized image 52, and therefore the relative position between the target parking area displayed on the synthesized image 52 and the vehicle C can be confirmed easily. Further, the driver is able to understand intuitively that the guide lines Rv, St rendered on the current image 51 are the turning route and straight driving route of the vehicle C.
(5) In the first embodiment, the current image 51 based on the current image data G2 and the recorded image 50 based on the bird's-eye view data G1 captured and accumulated in the past are displayed on the parking assist screen 55. Thus, a bird's-eye view image of the vehicle periphery is displayed, and therefore the distance between the white lines on either side of the vehicle and the vehicle C can be grasped easily. Furthermore, since the recorded image 50 and current image 51 can be displayed, the target parking area can be checked in a wider range.

### Second Embodiment

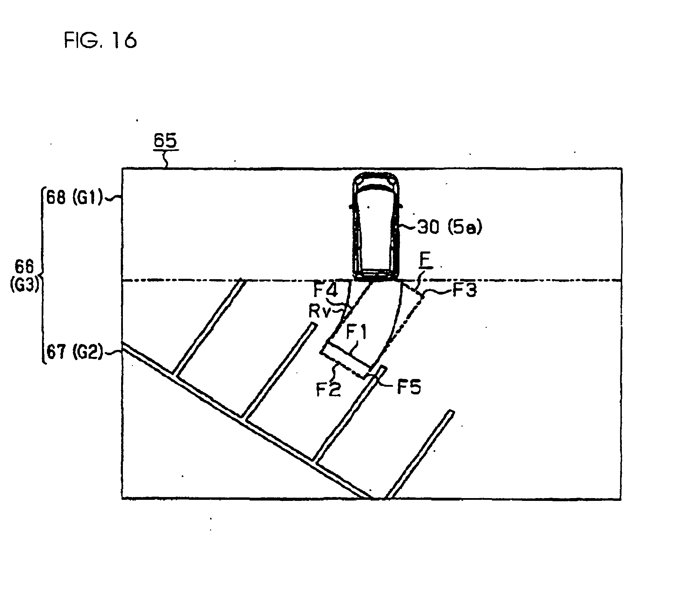

Next, a second embodiment of the present invention will be described using FIGS. 15 and 16. Note that in the second embodiment, only the straight driving guide lines St of the first embodiment are modified, and therefore detailed description of identical parts has been omitted.

In the rendering processing (see FIG. 11) for rendering the turning guide lines Rv and straight driving guide lines St of the second embodiment, identical processing to that of the first embodiment is performed in the steps S5-1 through S5-6. In the step S5-7, the image processor 15 renders a straight driving guide frame F as the predicted position index instead of the straight driving guide lines St. The straight driving guide frame F shows the outer form of the vehicle in a position where the vehicle C is parallel to the white line approximations Sg.

The straight driving guide frame F will now be described using FIG. 15. The straight driving guide frame F is constituted by a predicted axle position F1, a predicted rear end position F2, a predicted front end position F3, and predicted side end positions F4, F5. The predicted axle position F 1 denotes the predicted position of the rear axle when the vehicle C reverses from its current position along the predicted course lines Tr (see FIG. 6), i.e. without turning the steering wheel, such that the vehicle C becomes parallel to the white line approximations Sg. Here, the predicted axle position F1 is rendered by a solid line, but may be rendered using broken lines. Note that the predicted axle position F1 is rendered in the same position as the first segment St1 of the first embodiment.

The predicted rear end position F2 and the predicted front end position F3 are lines rendered to predict the positions of the rear end and front end of the vehicle C, respectively, when the vehicle C reverses along the predicted course lines Tr (see FIG. 6) such that the vehicle C becomes parallel to the white line approximations Sg. Further, the predicted side end positions F4, F5 show the side ends of the vehicle C when the rear wheel, rear end, or front end of the vehicle C is in the predicted axle position F1, predicted rear end position F2, or predicted front end position F3. In other words, the predicted axle position F1 is rendered in a direction intersecting the white line approximations Sg, and the predicted side end positions F4, F5 are rendered parallel to the white line approximations Sg.

When the coordinates of the straight driving guide frame F are calculated on the basis of the contact points P1, P2 (step S5-7), the image processor 15 outputs synthesized data G3 such as that of the first embodiment to the display 8 (step S5-8). Further, the image processor 15 outputs the vehicle image data 5a to a predetermined position in the display area Zd of the display 8 (step S5-9).

Having outputted the synthesized data G3 and vehicle image data 5a, the image processor 15 outputs the straight driving guide frame F, the coordinates of which were calculated in the step S5-7, and the turning guide lines Rv as guide lines (step S5-9).

As a result, a parking assist screen 65 such as that shown in FIG. 16 is displayed on the display 8. A synthesized image 66 based on the synthesized data G3 is displayed on the parking assist screen 66. In the synthesized image 66 of this embodiment, the extraction range of the bird's-eye view data G1 is large, and therefore a wider vehicle periphery area than that of the first embodiment is rendered. The synthesized image 66 displays a current image 67 based on the current image data G2, and a recorded image 68 based on the bird's-eye view data G1 captured and accumulated in the image memory 17 in the past. Further, a vehicle image 30 showing the entire vehicle is superposed on the recorded image 68.

Further, the straight driving guide frame F and the turning guide lines Rv are superposed on the synthesized image 66. The straight driving guide frame F is rendered at substantially the same size as the size of the vehicle C, and therefore the user can understand intuitively that the straight driving guide frame F denotes the position of the vehicle after turning in accordance with the turning guide lines Rv. Further, the fact that the straight driving guide frame F is parallel to the white lines rendered on the synthesized image 66 can be confirmed from the screen, and therefore the driver can understand intuitively that the vehicle C should be driven straight back from the straight driving guide frame F. After rendering the guide lines (step S5-10), the routine advances to the step S6, where a determination is made as to whether or not the end trigger has been input.

According to the second embodiment, the following effect can be obtained.

(6) In the second embodiment, the straight driving guide frame F denoting the vehicle C when parallel to the white lines 100 is rendered as the straight driving start position on the basis of the contact points P1, P2 between the white line approximations Sg or parallel expressions Sg1 and the predicted course lines Tr. In other words, the straight driving start position is rendered in the form of a frame indicating the outer form of the vehicle C, and therefore, the driver can grasp the role of the straight driving guide frame F intuitively.

Note that the embodiments described above may be modified in the following ways.

In the embodiments described above, the bird's-eye view data G1 are written into a corresponding area of the memory area A of the main memory 17, but the bird's-eye view data G1 may be stored in association with the coordinate data and steering angle data. Further, the image data G may be stored in the image memory 17 without being subjected to bird's-eye view conversion.

In the embodiments described above, the image recording distance D1 is set at 100 mm, but may be set at another distance.

In the embodiments described above, the bearing detection signal GRP based on the gyroscope 21 may be used instead of the steering sensor signal STP during data accumulation and image processing.

The synthesized image 52 may be generated using a synthesis method other than the procedure described above. For example, the bird's-eye view data subjected to bird's-eye view conversion may be output to the display 8 immediately, without accumulating the image data input from the camera 25. Alternatively, instead of a bird's-eye view image, the turning guide lines Rv and straight driving guide lines St may be rendered on a peripheral image of the front, rear, or another peripheral viewpoint of the vehicle C. Note that when the image data G are displayed on the display 8 without being subjected to bird's-eye view conversion and edge extraction is performed to calculate the turning guide lines Rv and straight driving guide lines St, edge extraction may be performed as is, without subjecting the image data G to bird's-eye view conversion.

In the embodiments described above, the display possible flag is switched ON when the predetermined amount of bird's-eye view data G1 has accumulated in the image memory 17, but the display possible flag may be switched ON when bird's-eye view data G1 have been written into an entire predetermined data area. Alternatively, the display possible flag may be switched ON or the synthesized image 52 (recorded image 50) may be displayed when only one set of bird's-eye view data G 1 has accumulated in the image memory 17. In this case, a non-display image such as a mask may be displayed in the areas in which bird's-eye view data G1 have not accumulated.

The parking assist screen 55, 65 may be a screen displaying the guide lines Rv, St and the current image 51 and omitting the recorded image 50, 68.

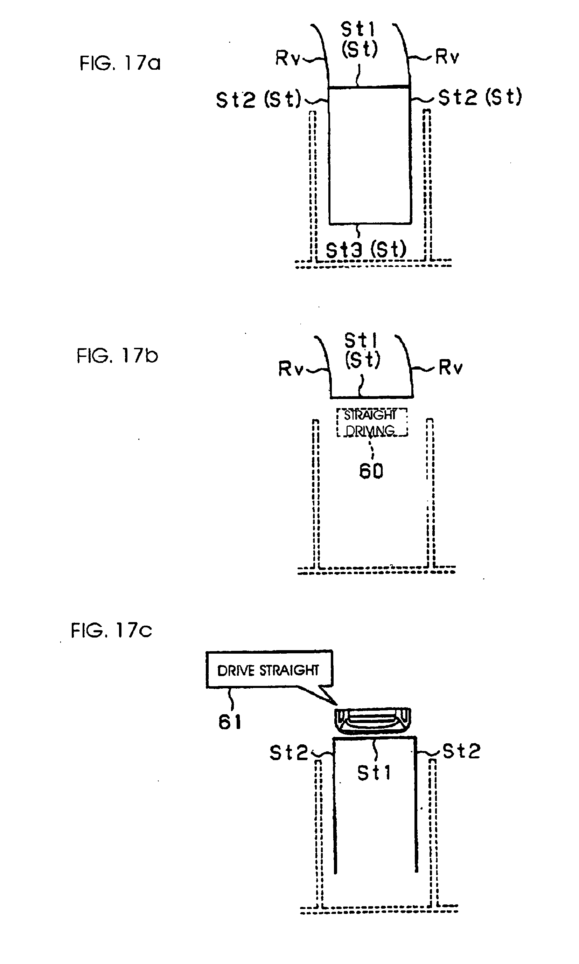

In the first embodiment, the turning guide lines Rv and straight driving guide lines St may be guide lines other than those described above. For example, as shown in FIG. 17A, a third segment St3 parallel to the first segment St1 may be rendered at the terminals of the second segments St2 to illustrate the size of the vehicle body. Alternatively, as shown in FIG. 17B, the second segments St2 may be omitted such that only the first segment St1 of the straight driving guide lines St is rendered. In this case, an index 60 indicating the straight driving start position may be displayed in the vicinity of the first segment St1. Alternatively, the first segment St1 may be omitted such that only the second segments St2 are rendered. Alternatively, as shown in FIG. 17C, a voice 61 saying "Drive straight" or the like may be output through the speaker 12 when the vehicle C approaches the first segment St1 or the like.

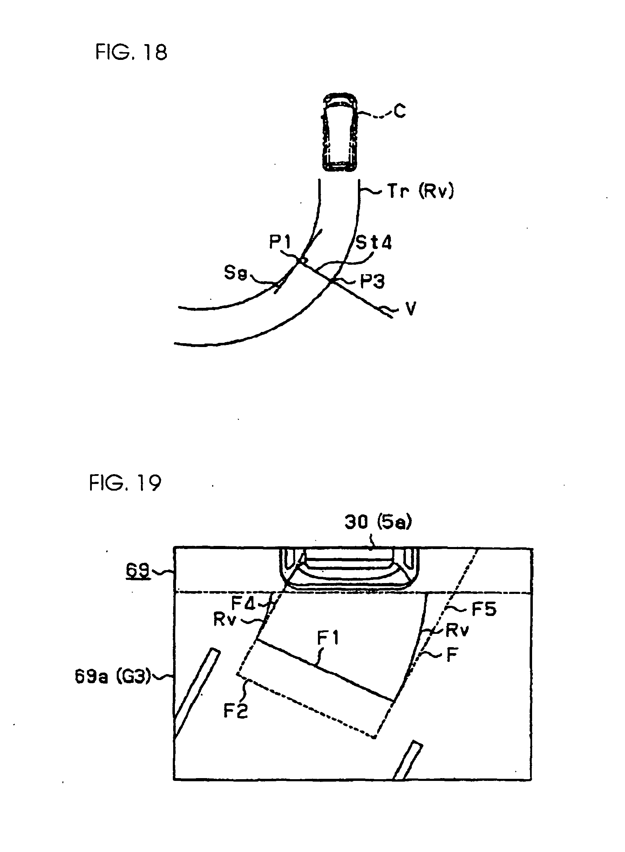

In the embodiments described above, the guide lines Rv, St are only rendered when the pair of white line approximations Sg are calculated, but the guide lines Rv, St may be rendered when only one white line approximation Sg can be calculated. For example, as shown in FIG. 18, the image processor 15 determines a contact point P1 between a single white line approximation Sg (or a parallel expression parallel to the white line approximation Sg) and a predicted course line Tr. A perpendicular V of the white line approximation Sg (or parallel expression) passing through the contact point P1 is then determined, and a contact point P3 between the perpendicular V and the other predicted course line Tr is determined. A fourth segment St4 connecting the contact point P1 and the contact point P3 is then determined. The fourth segment St4 denotes the straight driving start position in the first embodiment, similarly to the first segment St1, and denotes the predicted axle position F1 in the second embodiment. Further, second segments St2 parallel to the white line approximation Sg or a straight driving guide frame F (not shown in FIG. 18) are rendered using the contact point P1 and the contact point P3 as starting points.

The image processor 15 may detect the edges of other parked vehicles instead of the white lines. The contact points P1, P2 between the edges and the predicted course lines Tr may then be determined recognizing the space between the edges as the target parking area, and the turning guide lines Rv and straight driving guide lines St may be determined therefrom.

In the second embodiment, the vehicle image 30 showing only the rear portion of the vehicle C may be displayed, as shown in a parking assist screen 69 of FIG. 19. Further, as shown in FIG. 19, the entire straight driving guide frame F need not be included in a synthesized image 69a as long as at least a part of the straight driving guide frame F is included. In this case also, it is possible to determine that the straight driving guide frame F is parallel with the white lines on the synthesized image 69a, and therefore the role of the straight driving guide frame F can be grasped easily.

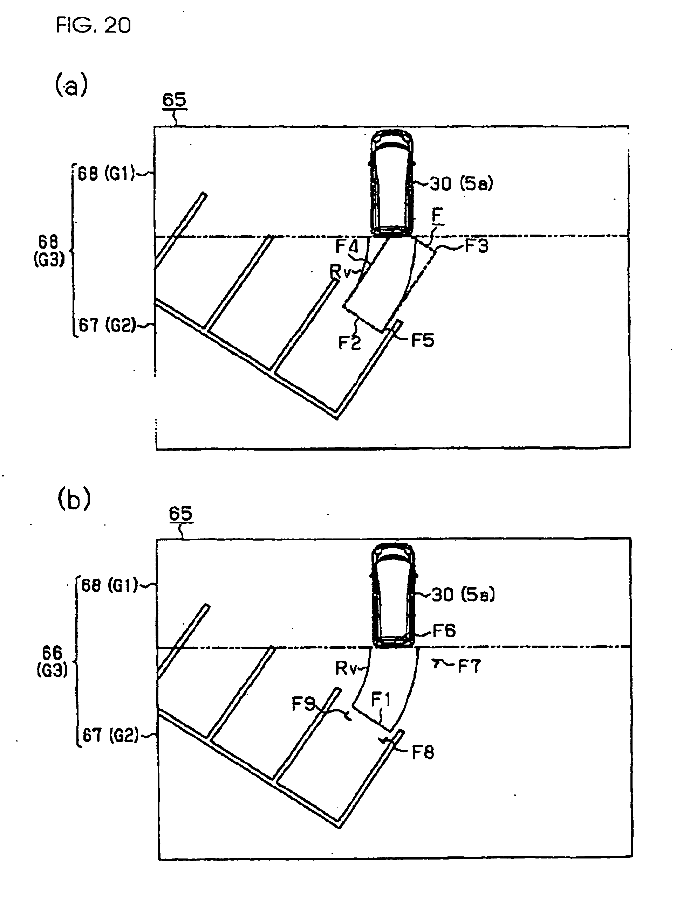

In the second embodiment, as shown in FIG. 20A, the straight driving guide frame F may be formed in a square frame shape omitting the predicted axle position F1. Further, as shown in FIG. 20B, the straight driving guide frame F may be constituted by corner positions F6 to F10 indicating each corner portion of the vehicle C when the vehicle C is parallel to the white line approximations Sg, and the predicted axle position F1.

In the second embodiment, as shown in FIG. 21, predicted straight driving course lines Ls may be rendered on the reverse direction (driving direction) side of the straight driving guide frame F. The predicted straight driving course lines Ls are rendered on the lines of extension of the predicted side end positions F4, F5, and denote the predicted course when reversing from the straight driving guide frame F. The predicted straight driving course lines Ls correspond to the second segments St2 of the first embodiment. In so doing, the relative distance and relative direction between the vehicle C and the white lines after reversing from the straight driving guide frame F can be grasped.

In the embodiments described above, the first segment St1 and the predicted axle position F1 are rendered as the rear axle position when the vehicle C becomes parallel to the target parking area. In addition, the first segment St1 and predicted axle position F1 may be rendered as the predicted position of the rear end of the vehicle C. In this case, the vehicle C can be parked in the target parking area by turning along the turning guide lines Rv until the rear end of the vehicle C matches the first segment St1 or the predicted axle position F1, and then turning the steering wheel so as to drive straight back.

In the embodiments described above, the parking assist screen 55 is displayed on the basis of the image data G generated by the camera 25 attached to the rear end of the vehicle, but a camera attached to the side end or front end of the vehicle may be used. For example, when a camera attached to the front end of the vehicle is used, parking assistance can be performed when the vehicle C parks by driving forward.

## Claims

1. A parking assist method for outputting a peripheral image to a display mechanism (8) on the basis of image data obtained from an imaging device (25) provided in a vehicle, comprising:
detecting a defining line (100) defining a target parking area;
calculating a straight driving guide index (St) indicating a position for starting straight driving relative to the target parking area such that the vehicle can be parked parallel to the defining line (100) on basis of a contact point (P1, P2) between a straight line denoting the defining line, or a straight line parallel to said defining line (100), and a predicted course line (Tr) based on the steering angle of the vehicle; and
outputting the straight driving guide index to the display mechanism (8) together with the peripheral image.

2. A parking assist device for installation in a vehicle, comprising:
an image data obtaining mechanism (14) adapted for obtaining image data from an imaging device (25) provided in the vehicle;
an output control mechanism (15) adapted for outputting a peripheral image based on the image data to a display mechanism (8) ;
a defining line detecting mechanism (15) adapted for detecting a defining line (100) defining a target parking area; and
a first index rendering mechanism (15) adapted for calculating a straight driving guide index (St) indicating a position for starting straight driving relative to the target parking area such that the vehicle can be parked parallel to the defining line (100) on basis of a contact point (P1, P2) between a straight line denoting the defining line, or a straight line parallel to said defining line, and a predicted course line (Tr) based on the steering angle of the vehicle; and
rendering the straight driving guide index together with the peripheral image.

3. The parking assist device according to claim 2, further comprising a second index rendering mechanism (15) adapted for rendering a predicted route index (Rv) corresponding to the steering angle of the vehicle together with the peripheral image.

4. The parking assist device according to claim 2 or 3, wherein the first index rendering mechanism (15) is adapted to calculate a contact point (P1, P2) between the straight line (Sg) denoting the defining line (100), or the straight line parallel to said defining line (100), and the predicted course line (Tr) based on the steering angle of the vehicle, and to render a position of the contact point as a straight driving start position (St 1).
line detecting mechanism (15) adapted for detecting a defining line defining the target parking area,
wherein the first index rendering mechanism (15) is adapted to calculate a contact point between a straight line denoting the defining line, or a straight line parallel to said defining line, and a predicted course line based on the steering angle of the vehicle, to calculate a vehicle position at which the vehicle becomes parallel to the defining line on the basis of the contact point, and to render a predicted position index indicating an outer form of the vehicle in the vehicle position.

5. The parking assist device according to claim 4, wherein the first index rendering mechanism (15) is adapted to display a straight driving course line parallel to the defining line using the contact point between the straight line denoting the defining line, or the straight line parallel to said defining line, and the predicted course line as a reference.

6. The parking assist device according to claim 2 or 3, further comprising a defining

7. The parking assist device according to any one of claims 4 to 6, wherein the second index rendering mechanism (15) is adapted to render a portion of the predicted course line extending from the rear of the vehicle to the contact point between the straight line denoting the defining line, or the straight line parallel to said defining line, and the predicted course line as the predicted route index.

8. The parking assist device according to any one of claims 2 to 7, further comprising a vehicle position rendering mechanism (15) adapted for displaying a current position index indicating a current position of the vehicle in the peripheral image.

9. The parking assist device according to any one of claims 2 to 8, further comprising:
an image data storage mechanism (17) adapted for storing the image data obtained from the imaging device (25) as recorded image data; and
an image synthesizing mechanism (15) adapted for synthesizing the recorded image data and latest image data to generate synthesized data displaying a current dead angle area and a current imaging area of the imaging device.

10. The parking assist device according to any one of claims 2 to 9, further comprising an image processing mechanism (15) adapted for subjecting the image data to image processing to generate bird's-eye view data of the vehicle periphery,
wherein the output control mechanism (15) is adapted to display a bird's-eye view image based on the bird's-eye view data on the display mechanism (8), and
the first index rendering mechanism (15) is adapted to render the straight driving guide index together with the bird's-eye view image.

## Patentansprüche

1. Parkunterstützungsverfahren zum Ausgeben eines Umgebungsbildes an eine Anzeigeeinrichtung (8) auf der Basis von Bilddaten, die von einer bildgebenden Vorrichtung (25), die in einem Fahrzeug vorgesehen ist, gewonnen werden, mit den Schritten:
Erfassen einer Abgrenzlinie (100), die ein Ziel-Parkgebiet abgrenzt;
Berechnen eines Geradefahrleitindexes (St), der eine Position zum Beginnen eines geraden Fahrens relativ zu dem Ziel-Parkgebiet, so dass das Fahrzeug parallel zu der Abgrenzlinie (100) geparkt werden kann, auf Basis eines Kontaktpunkts (P1, P2) zwischen einer geraden Linie, die die Abgrenzlinie kennzeichnet, oder einer geraden Linie parallel zu der Abgrenzlinie (100), und einer vorhergesagten Kurslinie (Tr) basierend auf dem Lenkwinkel des Fahrzeugs anzeigt; und
Ausgeben des Geradefahrleitindexes an die Anzeigeeinrichtung (8) zusammen mit dem Umgebungsbild.

2. Parkunterstützungsvorrichtung zur Installation in einem Fahrzeug, mit
einer Bilddatenempfangseinrichtung (14), die zum Empfangen von Bilddaten von einer bildgebenden Vorrichtung (25), die in einem Fahrzeug vorgesehen ist, angepasst ist,
einer Ausgabesteuereinrichtung (15), die angepasst ist zum Ausgeben eines Umgebungsbildes, das auf den Bilddaten basiert, an eine Anzeigeeinrichtung (8),
einer Abgrenzlinien-Erfassungseinrichtung (15), die angepasst ist zum Erfassen einer Abgrenzlinie (100), die ein Ziel-Parkgebiet abgrenzt, und
einer ersten Index-Ausgabeeinrichtung (15), die angepasst ist zum Berechnen eines Geradefahrleitindexes (St), der eine Position zum Beginnen eines geraden Fahrens relativ zu dem Ziel-Parkgebiet, so dass das Fahrzeug parallel zu der Abgrenzlinie (100) geparkt werden kann, auf Basis eines Kontaktpunkts (P1, P2) zwischen einer geraden Linie, die die Abgrenzlinie kennzeichnet, oder einer geraden Linie parallel zu der Abgrenzlinie, und einer vorhergesagten Kurslinie (Tr) basierend auf dem Lenkwinkel des Fahrzeugs anzeigt, und
zum Ausgeben des Geradefahrleitindexes zusammen mit dem Umgebungsbild.

3. Parkunterstützungsvorrichtung nach Anspruch 2, die weiter eine zweite Index-Ausgabeeinrichtung (15) aufweist, die angepasst ist zum Ausgeben eines vorhergesagten Routenindexes (Rv) entsprechend dem Lenkwinkel des Fahrzeugs zusammen mit dem Umgebungsbild.

4. Parkunterstützungsvorrichtung nach Anspruch 2 oder 3, bei der die erste Index-Ausgabeeinrichtung (15) angepasst ist zum Berechnen eines Kontaktpunkts (P1, P2) zwischen der geraden Linie (Sg), die die Abgrenzlinie (100) kennzeichnet, oder der geraden Linie parallel zu der Abgrenzlinie (100), und der vorhergesagten Kurslinie (Tr) basierend auf dem Lenkwinkel des Fahrzeugs und zum Ausgeben einer Position des Kontaktpunkts als eine Geradefahr-Startposition (St1).

5. Parkunterstützungsvorrichtung nach Anspruch 4, bei der die erste Index-Ausgabeeinrichtung (15) angepasst ist zum Anzeigen einer Geradefahr-Kurslinie parallel zu der Abgrenzlinie unter Verwendung des Kontaktpunkts zwischen der geraden Linie, die die Abgrenzlinie kennzeichnet, oder der geraden Linie parallel zu der Abgrenzlinie, und der vorhergesagten Kurslinie als ein Bezug.

6. Parkunterstützungsvorrichtung nach Anspruch 2 oder 3, die weiter eine Abgrenzlinienerfassungseinrichtung (15) aufweist, die angepasst ist zum Erfassen einer Abgrenzlinie, die das Ziel-Parkgebiet abgrenzt,
bei der die erste Index-Ausgabeeinrichtung (15) angepasst ist zum Berechnen eines Kontaktpunkts zwischen einer geraden Linie, die die Abgrenzlinien kennzeichnet, oder einer geraden Linie parallel zu der Abgrenzlinie, und einer vorhergesagten Kurslinie basierend auf dem Lenkwinkel des Fahrzeugs, zum Berechnen einer Fahrzeugposition, an der das Fahrzeug parallel zu der Abgrenzlinie sein wird, auf der Basis des Kontaktpunkts, und zum Ausgeben eines vorhergesagten Positionsindexes, der eine Außenform des Fahrzeugs in der Fahrzeugposition angibt.

7. Parkunterstützungsvorrichtung nach einem der Ansprüche 4 bis 6, bei der die zweite Index-Ausgabeeinrichtung (15) angepasst ist zum Ausgeben eines Abschnitts der vorhergesagten Kurslinie, der sich von dem Heck des Fahrzeugs zu dem Kontaktpunkt zwischen der geraden Linie, die die Abgrenzlinie kennzeichnet, oder der geraden Linie parallel zu der Abgrenzlinie, und der vorhergesagten Kurslinie erstreckt, als der vorhergesagte Routenindex.

8. Parkunterstützungsvorrichtung nach einem der Ansprüche 2 bis 7, die weiter eine Fahrzeugpositionswiedergabeeinrichtung (15) aufweist, die angepasst ist zum Anzeigen eines Momentanpositionsindexes, der eine Momentanposition des Fahrzeugs in dem Umgebungsbild anzeigt.

9. Parkunterstützungsvorrichtung nach einem der Ansprüche 2 bis 8, weiter aufweisend
eine Bilddatenspeichereinrichtung (17), die angepasst ist zum Speichern der Bilddaten, die von der bildgebenden Vorrichtung (25) empfangen werden, als aufgenommene Bilddaten, und
eine Bildsynthetisiereinrichtung (15), die angepasst ist zum Synthetisieren der aufgenommen Bilddaten und von neuesten Bilddaten zum Erzeugen zusammengeführter Daten, die ein momentanes Totewinkelgebiet und ein momentanes Bildgebiet der bildgebenden Vorrichtung anzeigen.

10. Parkunterstützungsvorrichtung nach einem der Ansprüche 2 bis 9, die weiter eine Bildverarbeitungseinrichtung (15) aufweist, die dazu angepasst ist, die Bilddaten einer Bildverarbeitung zum Erzeugen vogelperspektivischer Daten der Fahrzeugumgebung zu unterziehen,
bei der die Ausgabesteuereinrichtung (15) angepasst ist zum Anzeigen eines vogelperspektivischen Bildes basierend auf den vogelperspektivischen Daten auf der Anzeigeeinrichtung (8), und
die erste Index-Ausgabeeinrichtung (15) angepasst ist zum Ausgeben des Geradefahrleitindexes zusammen mit dem vogelperspektivischen Bild.

## Revendications

1. Procédé d'assistance au stationnement destiné à sortir une image périphérique sur un mécanisme d'affichage (8) sur la base des données d'image obtenues à partir d'un dispositif imageur (25) prévu dans un véhicule, comprenant :
la détection d'une ligne de définition (100)
définissant une zone de stationnement cible ;
le calcul d'un indice de guidage de conduite
droite (St) indiquant une position pour le démarrage de la conduite droite par rapport à la zone de stationnement cible de sorte que le véhicule puisse être stationné parallèlement à la ligne de définition (100) sur la base d'un point de contact (P1, P2) entre une ligne droite indiquant la ligne de définition, ou une ligne droite parallèle à ladite ligne de définition (100), et un axe d'alignement théorique (Tr) basé sur l'angle de braquage du véhicule ; et
la sortie de l'indice de guidage de conduite
droite sur le mécanisme d'affichage (8) conjointement avec l'image périphérique.

2. Dispositif d'assistance au stationnement destiné à être installé dans un véhicule, comprenant :
un mécanisme obtenant des données d'image (14)
adapté pour obtenir des données d'image à partir d'un dispositif imageur (25) prévu dans le véhicule;
un mécanisme de commande de sortie (15) adapté
pour sortir une image périphérique basée sur les données d'image sur un mécanisme d'affichage (8) ;
un mécanisme détectant la ligne de définition (15)
adapté pour détecter une ligne de définition (100) définissant une zone de stationnement cible ; et
un mécanisme restituant un premier indice (15)
adapté pour calculer un indice de guidage de conduite droite (St) indiquant une position pour le démarrage de la conduite droite par rapport à la zone de stationnement cible de sorte que le véhicule puisse être stationné parallèlement à la ligne de définition (100) sur la base d'un point de contact (P1, P2) entre une ligne droite indiquant la ligne de définition, ou une ligne droite parallèle à ladite ligne de définition, et un axe d'alignement théorique (Tr) basé sur l'angle de braquage du véhicule ; et
la restitution de l'indice de guidage de conduite
droite conjointement avec l'image périphérique.

3. Dispositif d'assistance au stationnement selon la revendication 2, comprenant en outre un mécanisme restituant un second indice (15) adapté pour restituer un indice d'alignement théorique (Rv) correspondant à l'angle de braquage du véhicule conjointement avec l'image périphérique.

4. Dispositif d'assistance au stationnement selon la revendication 2 ou 3, dans lequel le mécanisme restituant un premier indice (15) est adapté pour calculer un point de contact (P1, P2) entre la ligne droite (Sg) indiquant la ligne de définition (100) ou la ligne droite parallèle à ladite ligne de définition (100), et l'axe d'alignement théorique (Tr) basé sur l'angle de braquage du véhicule, et pour restituer une position du point de contact comme position pour le démarrage de la conduite droite (St 1).

5. Dispositif d'assistance au stationnement selon la revendication 4, dans lequel le mécanisme restituant un premier indice (15) est adapté pour afficher un axe d'alignement de conduite droite parallèle à la ligne de définition en utilisant le point de contact entre la ligne droite indiquant la ligne de définition, ou la ligne droite parallèle à ladite ligne de définition, et l'axe d'alignement théorique comme dite ligne de définition de référence.

6. Dispositif d'assistance au stationnement selon la revendication 2 ou 3, comprenant en outre un mécanisme de détection de ligne de définition (15) adapté pour détecter une ligne de définition définissant la zone de stationnement cible,
dans lequel le mécanisme restituant un premier
indice (15) est adapté pour calculer un point de contact entre une ligne droite indiquant la ligne de définition, ou une ligne droite parallèle à ladite ligne de définition, et un axe d'alignement théorique basé sur l'angle de braquage du véhicule, pour calculer une position de véhicule, dans laquelle le véhicule devient parallèle à la ligne de définition sur la base du point de contact, et pour restituer un indice de position théorique indiquant une forme extérieure du véhicule dans la position du véhicule.

7. Dispositif d'assistance au stationnement selon l'une quelconque des revendications 4 à 6, dans lequel le mécanisme restituant un second indice (15) est adapté pour restituer une partie de l'axe d'alignement théorique s'étendant de l'arrière du véhicule jusqu'au point de contact entre la ligne droite indiquant la ligne de définition, ou la ligne droite parallèle à ladite ligne de définition, et l'axe d'alignement théorique comme indice d'alignement théorique.

8. Dispositif d'assistance au stationnement selon l'une quelconque des revendications 2 à 7, comprenant en outre un mécanisme restituant la position de véhicule (15) adapté pour l'affichage d'un indice de position actuelle indiquant une position actuelle du véhicule dans l'image périphérique.

9. Dispositif d'assistance au stationnement selon l'une quelconque des revendications 2 à 8, comprenant en outre :
un mécanisme d'enregistrement des données d'image (17) adapté pour enregistrer les données d'image obtenues à partir du dispositif imageur (25) comme données d'image enregistrées ; et
un mécanisme de synthétisation d'image (15) adapté
pour synthétiser les données d'image enregistrées et les dernières données d'image en vue de générer des données synthétisées affichant une zone d'angle mort actuelle et une zone d'imagerie actuelle du dispositif imageur.

10. Dispositif d'assistance au stationnement selon l'une quelconque des revendications 2 à 9, comprenant en outre un mécanisme de traitement d'image (15) adapté pour soumettre les données d'image au traitement d'image en vue de générer des données de vue à vol d'oiseau de la périphérie du véhicule,
dans lequel le mécanisme de commande de sortie (15) est adapté pour afficher une image de vue à vol d'oiseau basée sur les données de vue à vol d'oiseau sur le mécanisme d'affichage (8), et
le mécanisme restituant un premier indice (15) est
adapté pour restituer l'indice de guidage de conduite droite conjointement avec l'image de vue à vol d'oiseau.
